# EUROPEAN PATENT SPECIFICATION

(11) **EP 1 283 456 B1**
(45) Date of publication and mention of the grant of the patent: **17.11.2004**
(21) Application number: 02017390.2
(22) Date of filing: 02.08.2002
(51) Int. Cl.: G05B 19/4093

(54) **Tool for searching similar machining data and automatic programming apparatus based thereon**
Vorrichtung zum Suchen von ähnlichen Bearbeitungsdaten und darauf basierende automatische Programmiervorrichtung
Outil pour la recherche de données d'usinage semblables et appareil de programmation automatique basé sur celui-ci

(30) Priority: 09.08.2001 JP 2001242233
(43) Date of publication of application: 12.02.2003
(73) Proprietor: Mori Seiki Co., Ltd., Yamatokoriyama-shi, Nara 639-1160 (JP); Intelligent Manufacturing Systems International, Sacramento, CA 95814 (US)
(72) Inventor: Nakamura, Takayuki, Yamatokoriyama-shi, Nara, 639-1160 (JP); Tanaka, Shojiro, Yamatokoriyama-shi, Nara, 639-1160 (JP)
(74) Representative: Reinhard - Skuhra - Weise & Partner

(56) References cited:
- EP-A- 0 913 229
- WO-A-00/07081
- US-A- 5 465 221
- US-A- 5 799 530
- US-A- 6 112 133

## Description

### BACKGROUND OF THE INVENTION

The present invention relates to an apparatus that can accomplish efficient creation of an NC program to be used for a numerical control machine tool (NC machine tool).

### Description of the Prior Art

In the prior art, it is known to provide an automatic programming apparatus which automatically generates an NC program for an NC machine tool by using CAM (Computer aided manufacturing) techniques.

Such an automatic programming apparatus contains data concerning a set of tools and data concerning the machining conditions set for each of the tools in accordance with the material of a product and, based on product shape data and workpiece shape data given as required and on the tool data and the machining condition data, the apparatus generates programming base data comprising machining element data including configuration data concerning the configuration features of each machining portion of the product and process data concerning the kind of machining applied to each machining portion, and tool-related data concerning the tool to be used for the machining of each machining portion and its machining conditions, and then automatically generates an NC program from the thus generated programming base data.

Some of such automatic programming apparatuses are designed to enable the input of the product shape data and workpiece shape data, the selection of the tool to be used and the machining conditions, etc. to be done in interactive fashion; furthermore, some are constructed as so-called CAD/CAM systems in which the product shape data and workpiece shape data are automatically extracted from design data (CAD data) created by CAD (Computer aided design).

Conventional automatic programming apparatuses are disclosed, for instance, in documents EP-A-0 913 229 and US-A-6 112 133.

Among products machined by NC machine tools, there are products that have similar shapes between them, and the programming base data for such similar products are similar to each other. Accordingly, when machining a similar product whose shape is similar to that of a product machined in the past, programming base data could be easily generated for the similar product by using the programming base data already generated for the past product and by applying necessary addition, deletion, or correction to the data only for portions where the shape differs.

However, none of the above prior art automatic programming apparatuses have been equipped with a function that can utilize the programming base data generated in the past, and when creating an NC program, programming base data has had to be generated for each individual product by following the same procedure for every product to be machined. Therefore, NC program creation using such prior art automatic programming apparatus has not always been efficient enough. In particular, in the case of an interactive automatic programming apparatus, when machining a similar product, the same data as the data input in the past has to be input, which is quite inefficient.

Document US-A-5 799 530 discloses a bending system in which the part number of a product contains an indication of the product's type. When data concerning an ordered part are received by the factory, a search is done on the basis of the part member to see whether data for bending operations for parts similar to the ordered part are stored in a database.

In view of the above situation, it is an object of the present invention to provide an apparatus that can accomplish efficient creation of an NC program by enabling programming base data created for a previously machined product to be used between similar products.

### SUMMARY OF THE INVENTION

The present invention which solves the above problem concerns a similar machining data searching apparatus comprising:
historical data storing section for prestoring therein programming base data for a plurality of products as historical data thereof, wherein the programming base data is data that serves as a base for NC program generation, and comprises machining element data including configuration data concerning configuration features of workpiece as well as configuration features of each machining portion of a product and process data concerning the kind of machining to be applied to each machining portion, and tool-related data concerning a tool to be used for the machining of each machining portion and machining conditions thereof;
machining element data generating section for generating the machining element data for the product to be machined, based on three-dimensional shape data for the product to be machined and three-dimensional shape data for the workpiece used; and
searching section for searching through the programming base data in the historical data storing section in accordance with a predetermined criterion on the basis of the machining element data generated by the machining element data generating section for the product to be machined, and for extracting programming base data containing machining element data that is similar to the machining element data generated for the product to be machined.

According to the above similar machining data searching apparatus, programming base data for a plurality of products are prestored as historical data in the historical data storing section. Then, based on the three-dimensional shape data for the product to be machined and the three-dimensional shape data of the workpiece used, the machining element data, which includes the configuration data concerning the configuration features of the workpiece as well as the configuration features of each machining portion of the product and the process data concerning the kind of machining to be applied to each machining portion, is generated by the machining element data generating section. The machining element data is obtained by calculating, for example, through Boolean operations, shape differences between the three-dimensional shape data of the workpiece and the three-dimensional shape data of the product to be machined.

The configuration data which forms part of the machining element data refers to data concerning the shapes, such as rectangle, triangle, and circle, and dimensions of the workpiece and each machining portion and data concerning the shapes and dimensions of an arrangement of holes, while the process data refers to data concerning the kind of machining such as hole machining, tap machining, pocket machining, side face machining, and top surface machining. On'the other hand, the tool data which forms part of the tool-related data refers to data concerning the type of tool such as a drill or end mill, tool diameter, tool length, tool material, etc., while the machining condition data refers to data concerning the cutting conditions, depth of cut, and feed speed that were set according to the material of the product to be machined and the material of the tool.

Next, the searching section searches through the programming base data in the historical data storing section in accordance with a predetermined criterion on the basis of the machining element data generated by the machining element data generating section for the product to be machined, and extracts the programming base data containing the machining element data that is similar to the machining element data generated for the product to be machined.

Thus, according to the above similar machining data searching apparatus, when machining a product that is similar in shape to a product whose programming base data is stored in the historical data storing section, use can be made of the programming base data stored in the historical data storing section for the similar product; as a result, the programming base data for the product to be machined can be easily and efficiently generated by applying necessary addition, deletion, or correction to the data only for portions where the shape differs between the similar products. In particular, when the programming base data stored in the history data storing section concern the products machined in the past and are optimized for the material of the tools used, the machining conditions, etc., it is advantageous to use such optimized programming base data.

The present invention also concerns an automatic programming apparatus comprising:
the above-described similar machining data searching apparatus;
programming base data generating section for modifying the programming base data extracted by the similar machining data searching apparatus, based at least on the machining element data generated by the similar machining data searching apparatus and on the extracted programming base data, and thereby generating programming base data for the product to be machined; and
NC program generating section for generating an NC program based on the programming base data generated by the programming base data generating section.

In this automatic programming apparatus, first the programming base data containing the machining element data that is similar to the machining element data generated for the product to be machined is extracted by the similar machining data searching apparatus from among the programming base data stored in the history data storing section. Next, the programming base data generating section modifies the programming base data extracted by the similar machining data searching apparatus, based at least on the machining element data generated by the similar machining data searching apparatus and on the extracted programming base data, and thereby generates the programming base data for the product to be machined. After that, based on the programming base data generated by the programming base data generating section, the NC program for the product to be machined is generated by the NC program generating section.

Thus, according to the above automatic programming apparatus, when machining a product that is similar in shape to a product whose programming base data is stored in the historical data storing section, use is made of the programming base data stored in the historical data storing section for the similar product and, based on this programming base data, the programming base data for the product to be machined is automatically generated, and the NC program for the product to be machined is automatically generated from the thus generated programming base data; as a result, the efficiency of NC program creation can be greatly enhanced.

Here, the programming base data generating section may be configured to store the generated programming base data in the history data storing section.

According to this automatic programming apparatus, the programming base data is stored in the history data storing section as it is generated by the programming base data generating section. In this way, the data can be accumulated efficiently in the history data storing section.

### BRIEF DESCRIPTION OF THE DRAWINGS

Figure 1 is a block diagram schematically showing the configuration of an automatic programming apparatus according to one embodiment of the present invention.
Figure 2 is a flow chart illustrating a processing procedure in the automatic programming apparatus according to the present embodiment.
Figure 3 is a flow chart illustrating a processing procedure in a similar data searching section according to the present embodiment.
Figure 4 is a flow chart illustrating a processing procedure in a programming base data generating section according to the present embodiment.
Figure 5A is a plan view showing the shape of a product as an example, and Figure 5B is an explanatory diagram showing an example of machining element data for the product shown in Figure 5A.
Figure 6A is a plan view showing the shape of a product as an example, and Figure 6B is an explanatory diagram showing an example of machining element data for the product shown in Figure 6A.
Figure 7A is a plan view showing the shape of a product as an example, and Figure 7B is an explanatory diagram showing an example of machining element data for the product shown in Figure 7A.
Figure 8A is a plan view showing the shape of a product as an example, and Figure 8B is an explanatory diagram showing an example of machining element data for the product shown in Figure 8A.

### DESCRIPTION OF THE PREFERRED EMBODIMENT

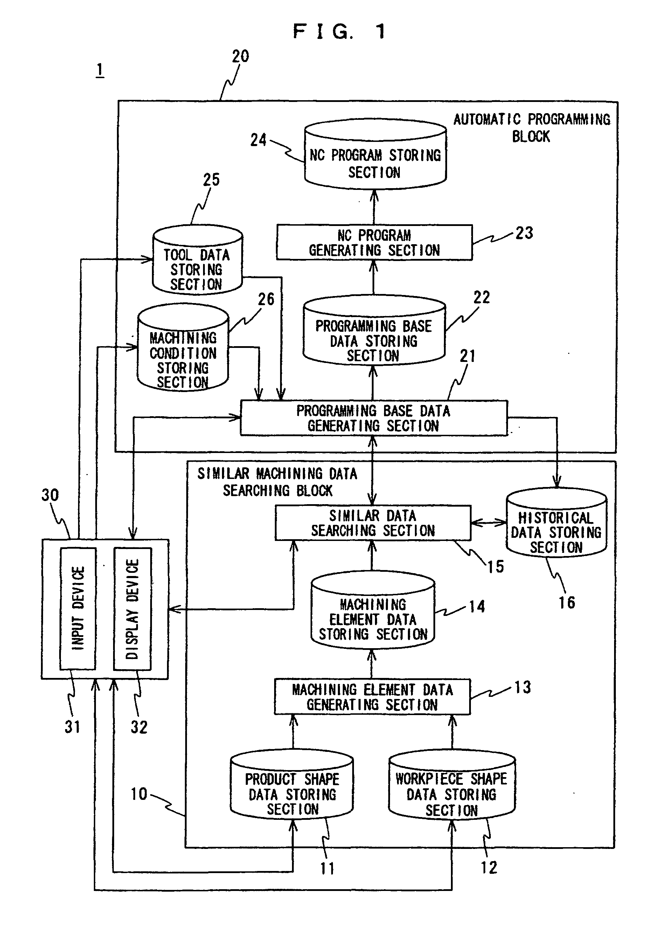

The preferred embodiment of the present invention will be described below with reference to the accompanying drawings. Figure 1 is a block diagram schematically showing the configuration of an automatic programming apparatus according to one embodiment of the present invention.

As shown in Figure 1, the automatic programming apparatus 1 of this embodiment comprises a similar machining data searching block 10 and an automatic programming block 20, each comprising a CPU, ROM, RAM, hard disk, etc., and a peripheral device 30 comprising an input device 31, such as a mouse and a keyboard, and a display device 32, such as a CRT, with provisions made to enable a coordinate position specified on the screen of the display device 32 to be input from the input device 31. Each block will be described in detail below.

### A. Similar machining data searching block

The similar machining data searching block 10 comprises storing section, which include a product shape data storing section 11, a workpiece shape data storing section 12, a machining element data storing section 14, and a historical data storing section 16, and processing section, which include a machining element data generating section 13 and a similar data searching section 15.

The product shape data storing section 11 is a functional section for storing three-dimensional product shape data (three-dimensional data after machining) input from the input device 31, and likewise, the workpiece shape data storing section 12 is a functional section for storing three-dimensional workpiece shape data input from the input device 31. When inputting the three-dimensional product shape data from the input device 31, data concerning its material (the material of the product, or in other words, the material of the workpiece) is also input and is stored in the workpiece shape data storing section 12.

Based on the three-dimensional product shape data stored in the product shape data storing section 11 and the three-dimensional workpiece shape data stored in the workpiece shape data storing section 12, the machining element data generating section 13 generates machining element data including configuration data concerning the configuration features of the workpiece as well as the configuration features of each machining portion of the product and process data concerning the kind of machining to be applied to each machining portion.

The configuration data which forms part of the machining element data comprises data concerning the shapes, such as rectangle, triangle, and circle, and dimensions of the workpiece and each machining portion and data concerning the shapes and dimensions of an arrangement of holes, while the process data comprises data concerning the kind of machining such as hole machining, tap machining, pocket machining, side face machining, and top surface machining. Such machining element data is obtained by calculating, for example, through Boolean operations, shape differences between the three-dimensional shape data of the workpiece and the three-dimensional shape data of the product to be machined.

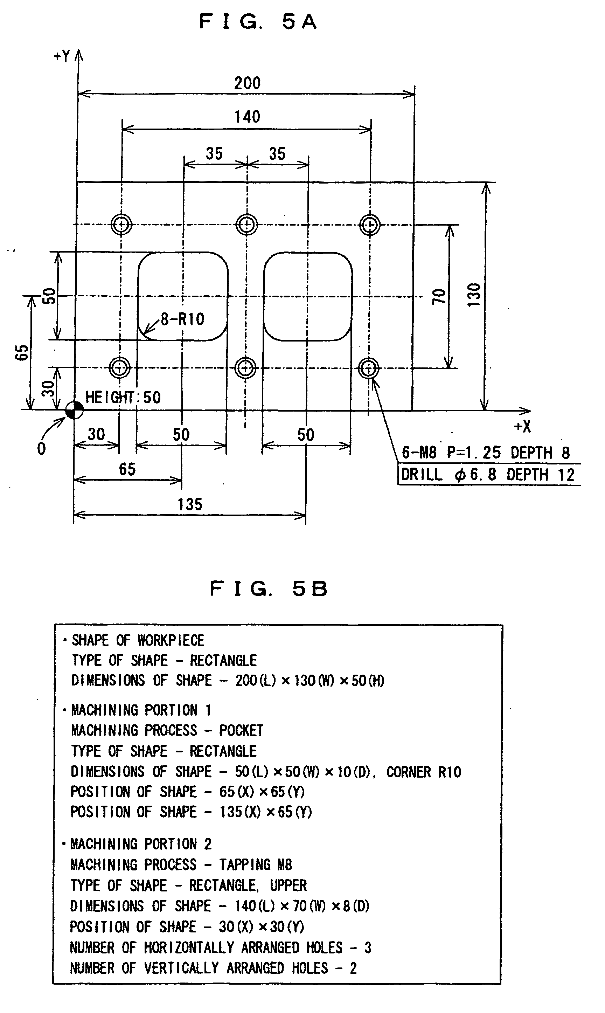

More specifically, in the case of a product whose dimensions are 200 mm in length, 130 mm in width, and 50 mm in height, for example, as shown in Figure 5A, the machining element data shown in Figure 5B are obtained. Though the workpiece used is not shown here, it is assumed that its planar shape is rectangular and its dimensions are 200 mm in length, 130 mm in width, and 50 mm in height. The type of shape and dimensions of shape in Figure 5B correspond to the configuration data of the workpiece; machining process for each of machining portions 1 and 2 corresponds to the process data; and the type of shape, dimensions of shape, position of shape, number of horizontally arranged holes, number of vertically arranged holes, etc. for each of the machining portions 1 and 2 correspond to the configuration data of each machining portion. Here, the position of shape is the position data expressing the position relative to the reference position O set for the product, and the number of horizontally arranged holes means the number of holes arranged along the horizontal side, while the number of vertically arranged holes means the number of holes arranged along the vertical side.

The machining element data storing section 14 is a functional section for storing the data concerning the material of the workpiece as well as the machining element data; that is, the machining element data generated by the machining element data generating section 13, and the data concerning the material of the workpiece, which is input via the input device 31 and stored in the workpiece shape data storing section 12, are stored in the machining element data storing section 14 by the machining element data generating section 13.

The historical data storing section 16 is a functional section for storing base data (programming base data) to be used for automatic generation of an NC program; that is, the programming base data generated by the automatic programming block 20 is stored and accumulated in the historical data storing section 16 on a product by product basis. The programming base data here refers to the base data used for automatic generation of an NC program, as noted above, and comprises at least the data concerning the material of the workpiece, the machining element data, and tool-related data concerning the tool used for the machining of each machining portion and its machining conditions . The tool data which forms part of the tool-related data refers to data concerning the type of tool such as a drill or end mill, tool diameter, tool length, tool material, etc., while the machining condition data refers to data concerning the cutting conditions, depth of cut, and feed speed that were set according to the material (workpiece material) of the product to be machined and the material of the tool.

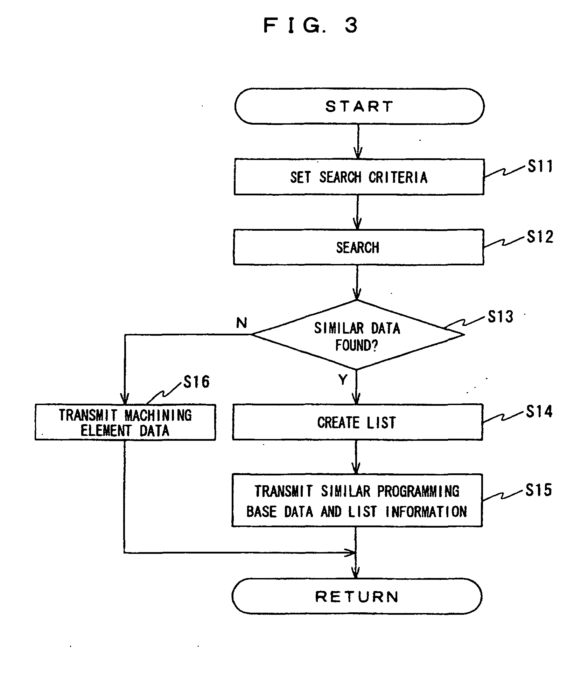

The similar data searching section 15 is a processing section which performs processing for searching through the programming base data in the historical data storing section 16 on the basis of the machining element data generated by the machining element data generating section 13 and stored in the machining element data storing section 14 for the product to be machined, and for extracting programming base data containing machining element data that is similar to the referenced machining element data; more specifically, the similar data searching section 15 performs the processing shown in Figure 3.

First, the similar data searching section 15 performs processing to set search criteria for extracting similar programming base data (step S11). This setting can be made interactively, for example, via the peripheral device 30. The search criteria can be set for each data item forming the machining element data; as an example, such conditions as (1) the workpiece shape is the same and the dimensional difference is not greater than 50% and (2) the machining process is the same and the dimensional difference is not greater than 50% can be set as the search criteria.

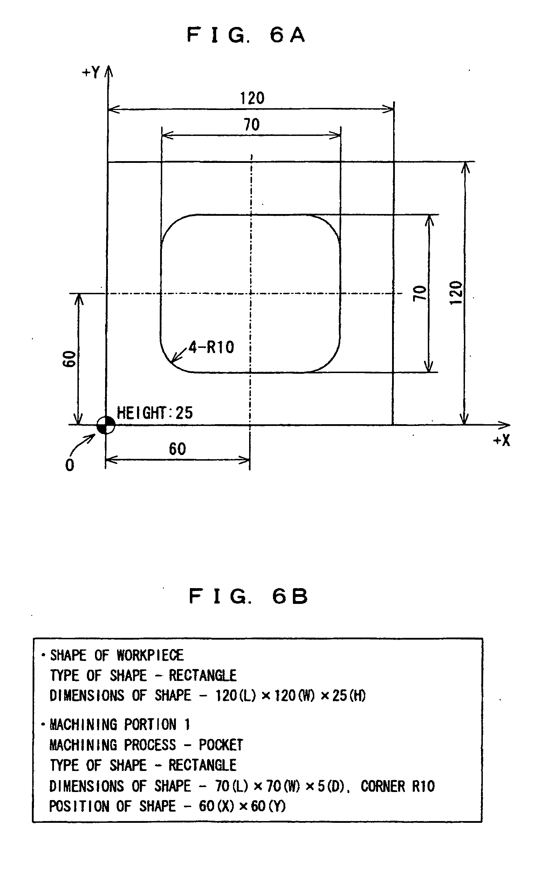

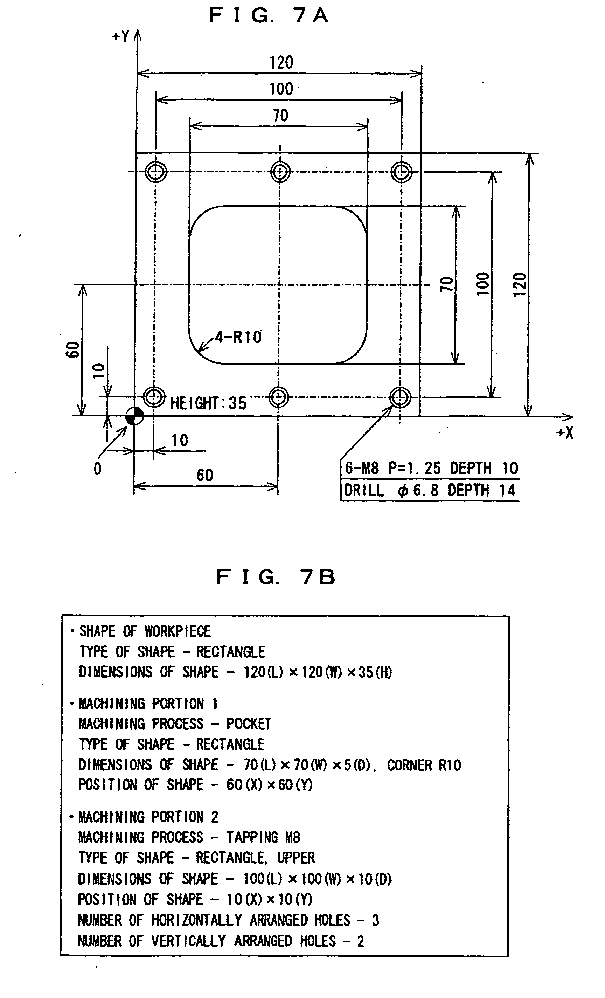

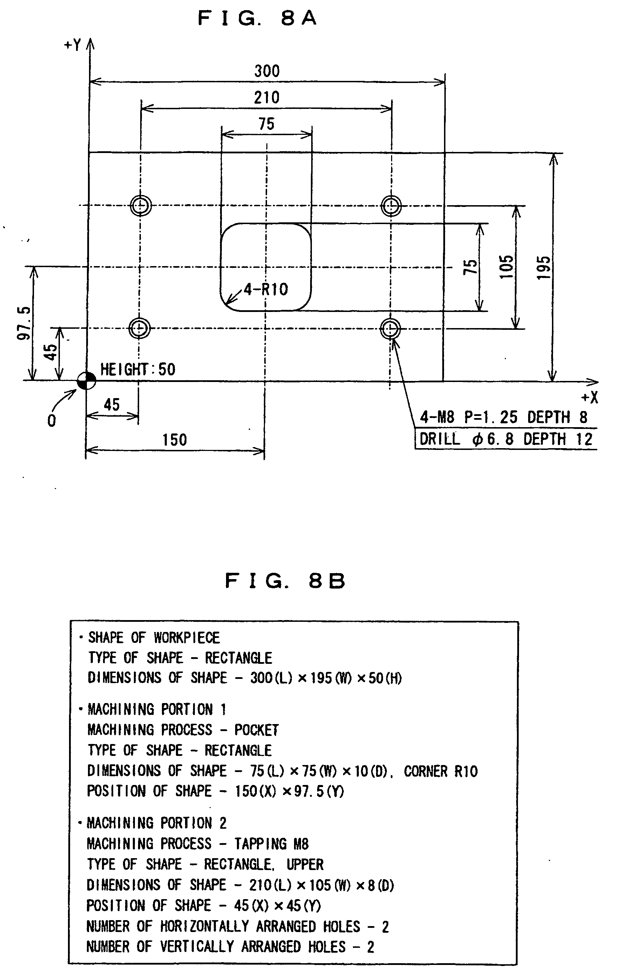

Next, the similar data searching section 15 searches through the programming base data in the historical data storing section 16 on the basis of the machining element data stored in the machining element data storing section 14 and the search criteria thus set in step S11, and extracts the programming base data containing the machining element data that satisfies the search criteria (step S12). Suppose, for example, that the programming base data for the product shown in Figure 5A is to be created and that programming base data for the products shown in Figures 6A, 7A, and 8A are stored in the historical data storing section 16; in this case, when the search is made with the above search criteria, the programming base data for the products shown in Figures 7A and 8A are extracted. The data shown in Figures 6B, 7B, and 8B are the machining element data for the products shown in Figures 6A, 7A, and 8A, respectively.

If such similar programming base data has been extracted, the similar data searching section 15 creates a list for the extracted data, and transmits the extracted programming base data and the list information to the automatic programming block 20 (steps S13, S14, and S15). On the other hand, if there is no similar programming base data, the similar data searching section 15 transmits the machining element data for the product to be machined to the automatic programming block 20 (steps S13 and S16). The list is used for the operator to confirm the contents of the extracted programming base data; more specifically, the list is displayed on the display device 32, and when the desired data is selected from the list, the selected programming base data is displayed on the display device 32.

### B. Automatic programming block

The automatic programming block 20 comprises storing section, which include a programming base data storing section 22, an NC program storing section 24, a tool data storing section 25, and a machining condition storing section 26, and processing section, which include a programming base data generating section 21 and an NC program generating section 23.

The tool data storing section 25 is a functional section for storing tool data including data such as tool type (drill, end mill, etc.), tool diameter, tool length, and tool material on a tool by tool basis; such tool data is stored in advance via the input device 31. The machining condition storing section 26 is a functional section for storing machining condition data including data such as the cutting conditions, depth of cut, and feed speed that were set according to the material (workpiece material) of the product to the machined and the material of the tool; such machining condition data is also stored in advance via the input device 31. The programming base data storing section 22 is a functional section for storing the programming base data generated by the programming base data generating section 21, and the NC program storing section 24 is a functional section for storing NC programs generated by the NC program generating section 23.

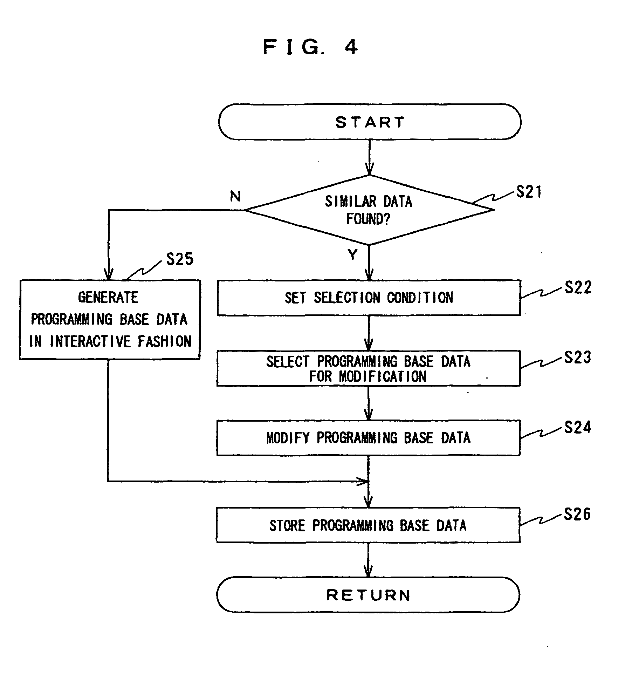

The programming base data generating section 21 is a processing section which, when similar programming base data is extracted by the similar data searching section 15, selects the programming base data to be used for modification from among the extracted similar programming base data and automatically generates the programming base data for the product to be machined by appropriately modifying the selected programming base data, and which, when similar programming base data has not been extracted by the similar data searching section 15, generates the programming base data for the product to be machined, based on the received machining element data through interaction via the peripheral device 30; more specifically, the programming base data generating section 21 performs the processing shown in Figure 4.

First, the programming base data generating section 21 checks whether similar programming base data has been extracted by the similar data searching section 15 (step S21) and, if similar programming base data has been extracted, then performs processing to set the condition based on which the programming base data for modification are selected from among the extracted similar programming base data (step S22). This setting can be made interactively, for example, via the peripheral device 30. When the similar programming base data is one that has been extracted in accordance with the search criteria used in the above-described example, the condition (1) the selection be made by giving priority to work material or (2) the selection be made by giving priority to dimension, for example, can be set as the selection condition.

Next, in accordance with the thus set selection condition, the programming base data generating section 21 selects the similar programming base data for modification from among the extracted similar programming base data (step S23). Suppose, for example, that the product shown in Figure 5 is the product to be machined, and that the products shown in Figures 7 and 8 are the extracted similar products; in this case, if the selection condition is set to give priority to dimension, the programming base data of the product shown in Figure 7 is selected.

Next, the programming base data generating section 21 compares the machining element data for the product to be machined with the machining element data contained in the similar programming base data selected for modification, and modifies the similar programming base data for portions where the data differs from the machining element data for the product to be machined (step S24). For example, if the similar machined product involves a larger number of machining processes than the product to be machined, then processing is performed to delete data concerning the excess processes from the similar programming base data. Further, for any machining portion of the similar machined product that differs in dimension from the corresponding portion of the product to be machined, dimension data for that machining portion in the similar programming base data is corrected. For example, when the product shown in Figure 5A is the product to be machined, and the product shown in Figure 7A is the selected similar product, then the shape dimension data and shape position data in the machining element data shown in Figure 7B are replaced by the shape dimension data and shape position data in the machining element data shown in Figure 5B.

On the other hand, if similar programming base data has not been extracted by the similar data searching section 15 (step S21), the programming base data generating section 21 performs processing, through interaction via the peripheral device 30, to generate the programming base data for the product to be machined, based on the machining element data received from the similar data searching section 15 (step S25). That is, based on the machining element data and on the data stored in the tool data storing section 25 and machining condition storing section 26, the tool data which forms part of the tool-related data is generated by executing an automatic expansionprocess for the tool used, and likewise, the machining condition data which forms part of the tool-related data is generated by executing a machining condition automatic determination process; then, the thus generated tool-related data is merged with the machining element data to create the programming base data for the product to be machined.

Next, the programming base data generating section 21 stores the modified similar programming base data or the newly generated programming base data into the programming base data storing section 22 and the historical data storing section 16. In this way, new programming base data is stored and accumulated in the historical data storing section 16 as it is generated.

The NC program generating section 23 is a processing section which reads out the programming base data stored in the programming base data storing section 22, and generates an NC program based on the readout data. More specifically, the NC program generating section 23 performs processing to generate CL (Cutter Location) data, etc. based on the programming base data, and generates an NC program from these data. The NC program thus generated is stored in the NC program storing section 24.

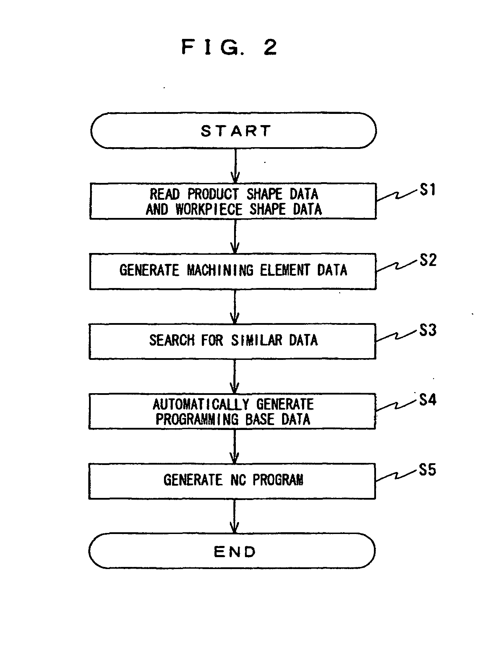

Next, a series of processing steps performed in the automatic programming apparatus 1 having the above configuration will be described with reference to Figure 2. As shown in the figure, the automatic programming apparatus 1 of this embodiment reads the three-dimensional shape data of workpiece and product through the input device 31, and stores the thus read three-dimensional shape data in the workpiece shape data storing section 12 and the product shape data storing section 11, respectively (step S1).

After the data have been respectively stored in the workpiece shape data storing section 12 and the product shape data storing section 11, the machining element data for the product to be machined is generated by the machining element data generating section 13, and the thus generated machining element data is stored in the machining element data storing section 14 (step S2).

Next, the machining element data for the product to be machined, which is stored in the machining element data storing section 14, is read out by the similar data searching section 15, and the programming base data stored in the historical data storing section 16 is searched on the basis of the readout machining element data; if programming base data is found that contains machining element data similar to the machining element data for the product to be machined, the programming base data is extracted and a list for the extracted data is created and transmitted to the programming base data generating section 21 together with the extracted similar programming base data. On the other hand, if such similar programming base data is not found, the machining element data for the product to be machined is transmitted to the programming base data generating section 21 (step S3).

When the similar programming base data is found, the programming base data generating section 21 modifies the data to generate the programming base data for the product to be machined; on the other hand, when such similar programming base data is not found, programming base data is generated in interactive fashion on the basis of the machining element data for the product to be machined, and the thus generated programming base data is stored in the programming base data storing section 22 (step S4).

Next, the NC program generating section 23 reads out the programming base data stored in the programming base data storing section 22, generates an NC program based on the readout programming base data, and stores the generated NC program in the NC program storing section 24 (step S5).

As described in detail above, according to the automatic programming apparatus 1 of this embodiment, when machining a product that is similar in shape to a product whose programming base data is stored in the historical data storing section 16, the programming base data for the product to be machined is automatically generated by utilizing the programming base data stored in the historical data storing section 16 for the similar product, and the NC program for the product to be machined is automatically generated from the generated programming base data; as a result, the efficiency of NC program creation can be greatly enhanced.

Furthermore, according to the automatic programming apparatus 1, since the programming base data is stored in the historical data storing section 16 as it is generated by the programming base data generating section 21, data can be accumulated efficiently in the historical data storing section 16. When the programming base data thus accumulated concern the products machined in the past and are optimized for the material of the tools used, the machining conditions, etc. in the automatic programming block 20, the advantage is enormous since such optimized programming base data can be used.

One embodiment of the present invention has been described above, but it will be appreciated that the mode that can carry out the invention is not limited by any specific embodiment thereof. For example, in the above embodiment, the condition that the machining process be the same has been used as a similarity judgement criterion (search criterion) in the similar data searching section 15, but alternatively, provisions may be made to determine that products are similar if part of the machining process is the same between them. In that case, excess or lack of data may occur between the similar product's machining element data selected by the programming base data generating section 21 and the machining element data for the product to be machined, but any data that is lacking can be added by retrieving it automatically or in interactive fashion from other similar product's programming base data extracted by the similar data searching section 15. Further, if tap nominal diameter, etc. are different, the tool-related data can be automatically generated based on the data stored in the tool data storing section 25 and the machining condition storing section 26.

In the above embodiment, the three-dimensional workpiece shape data has been described as being input from the input device 31, but alternatively, workpiece shape model data may be stored in advance, and the three-dimensional workpiece shape data may be generated from the three-dimensional product shape data and the workpiece shape model data.

Further, the historical data storing section 16 has been configured to store therein the programming base data generated by the automatic programming block 20, but in addition to that, it may be configured to be able to accept data input from the input device 31.

## Claims

1. An apparatus for searching similar machining data **characterised in that** it includes a historical data storing section (16) for prestoring therein programming base data for a plurality of products as historical data thereof, wherein said programming base data is data that serves as a base for NC program generation, and comprises machining element data including configuration data concerning configuration features of workpiece as well as configuration features of each machining portion of a product and process data concerning the kind of machining to be applied to said each machining portion, and tool-related data concerning a tool to be used for the machining of said each machining portion and machining conditions thereof;
a machining element data generating section (13) for generating said machining element data for the product to be machined, based on three-dimensional shape data for said product to be machined and three-dimensional shape data for the workpiece used; and
a searching section (15) for searching through said programming base data in said historical data storing section and for extracting programming base data containing machining element data that is similar to the machining element data generated for said product to be machined,
whereby
said programming base data in said historical data storing section is searched in accordance with a predetermined criterion on the basis of said machining element data generated by said machining element data generating section for said product to be machined.

2. An automatic programming apparatus (1) for automatically generating an NC program, including:
an apparatus (10) for searching similar machining data according to claim 1;
a programming base data generating section (21) for modifying the programming base data extracted by said apparatus (10) for searching similar machining data, based at least on the machining element data generated by said apparatus (10) for searching similar machining data and on said extracted programming base data, and thereby generating programming base data for the product to be machined; and
a NC program generating section (23) for generating said NC program based on said programming base data generated by said programming base data generating section.

3. An automatic programming apparatus according to claim 2, **characterized in that** said programming base data generating section (21) is configured to store said generated programming base data in said history data storing section (16).

## Patentansprüche

1. Vorrichtung zum Suchen nach ähnlichen Bearbeitungsdaten, **dadurch gekennzeichnet, dass** sie Folgendes enthält:
einen Speicherabschnitt (16) der Stammdaten zum Speichern von Programmierbasisdaten für eine Vielzahl an Produkten im Voraus darin als Stammdaten desselben, wobei die Programmierbasisdaten Daten sind, welche als Basis zur Erzeugung eines NC-Programms dienen und Bearbeitungselementdaten, einschließlich den die Konfigurationsmerkmale des Werkstücks und Konfigurationsmerkmale jedes Bearbeitungsabschnitts eines Produkts betreffenden Konfigurationsdaten und Prozessdaten, welche die für jeden Bearbeitungsabschnitt anzuwendende Bearbeitungsart betreffen, und werkzeugbezogene Daten enthalten, welche das für die Bearbeitung jedes Bearbeitungsabschnitts zu verwendende Werkzeug und die Bearbeitungszustände desselben betreffen;
einen die Bearbeitungselementdaten erzeugenden Abschnitt (13) zum Erzeugen der Bearbeitungselementdaten für das zu bearbeitende Produkt basierend auf dreidimensionalen Formdaten für das zu bearbeitende Produkt und dreidimensionalen Formdaten für das zu verwendende Werkstück; und
einen Suchabschnitt (15) zum Durchsuchen der Programmierbasisdaten im Speicherabschnitt der Stammdaten und zum Abfragen der Programmierbasisdaten, welche die Bearbeitungselementdaten enthalten, welche den für das zu bearbeitende Produkt erzeugten Bearbeitungselementdaten ähneln,
wobei die Programmierbasisdaten im Speicherabschnitt der Stammdaten gemäß einem im Voraus bestimmten Kriterium basierend auf den durch den Abschnitt zum Erzeugen der Bearbeitungselementdaten erzeugten Bearbeitungselementdaten für das zu bearbeitende Produkt durchsucht werden.

2. Automatische Programmiervorrichtung (1) zum automatischen Erzeugen eines NC-Programms, welche Folgendes enthält:
eine Vorrichtung (10) zum Suchen nach ähnlichen Bearbeitungsdaten nach Anspruch 1;
einen Abschnitt (21) zum Erzeugen der Programmierbasisdaten zum Ändern der durch die Vorrichtung (10) zum Suchen nach ähnlichen Bearbeitungsdaten abgefragten Programmierbasisdaten basierend auf mindestens den Bearbeitungselementdaten, welche durch die Vorrichtung (10) zum Suchen nach ähnlichen Bearbeitungsdaten erzeugt wurden, und den abgefragten Programmierbasisdaten, und zum Erzeugen der Programmierbasisdaten für das zu bearbeitende Produkt dadurch; und
einen ein NC-Programm erzeugenden Abschnitt (23) zum Erzeugen eines NC-Programms basierend auf den durch den Abschnitt zum Erzeugen der Programmierbasisdaten erzeugten Programmierbasisdaten.

3. Automatische Programmiervorrichtung nach Anspruch 2, **dadurch gekennzeichnet, dass** der Abschnitt (21) zum Erzeugen der Programmierbasisdaten zum Speichern der erzeugten Programmierbasisdaten im Speicherabschnitt (16) der Stammdaten vorgesehen ist.

## Revendications

1. Appareil pour rechercher des données d'usinage semblables, **caractérisé en ce qu'**il comprend:
une section de stockage de données historiques (16) pour pré-stocker dans celle-ci des données de base de programmation pour une pluralité de produits comme données historiques de ceux-ci, dans lequel lesdites données de base de programmation sont des données qui servent de base pour une génération de programme CN, et comprennent des données d'élément d'usinage comprenant des données de configuration concernant des caractéristiques de configuration d'une pièce ainsi que des caractéristiques de configuration de chaque partie d'usinage d'un produit et des données de traitement concernant le type d'usinage à appliquer à chaque partie d'usinage, ainsi que des données d'outil concernant un outil à utiliser pour l'usinage de chaque partie d'usinage et les conditions d'usinage de celle-ci;
une section de génération de données d'élément d'usinage (13) pour générer lesdites données d'élément d'usinage pour le produit à usiner, basées sur des données de forme tridimensionnelle pour ledit produit à usiner et des données de forme tridimensionnelle pour la pièce utilisée; et
une section de recherche (15) pour parcourir lesdites données de base de programmation dans ladite section de stockage de données historiques et pour extraire des données de base de programmation contenant des données d'élément d'usinage qui sont semblables aux données d'élément d'usinage générées pour ledit produit à usiner,
dans lequel lesdites données de base de programmation dans ladite section de stockage de données historiques sont recherchées suivant un critère prédéterminé sur la base desdites données d'élément d'usinage générées par ladite section de génération de données d'élément d'usinage pour ledit produit à usiner.

2. Appareil de programmation automatique (1) pour générer automatiquement un programme CN, comprenant:
un appareil (10) pour rechercher des données d'usinage semblables selon la revendication 1;
une section de génération de données de base de programmation (21) pour modifier les données de base de programmation extraites par ledit appareil (10) pour rechercher des données d'usinage semblables, basées au moins sur les données d'élément d'usinage générées par ledit appareil (10) pour rechercher des données d'usinage semblables, et sur lesdites données de base de programmation extraites, et générer ainsi des données de base de programmation pour le produit à usiner, et
une section de génération de programme CN (23) pour générer ledit programme CN sur la base desdites données de base de programmation générées par ladite section de génération de données de base de programmation.

3. Appareil de programmation automatique selon la revendication 2, **caractérisé en ce que** ladite section de génération de données de base de programmation (21) est configurée de manière à stocker lesdites données de base de programmation générées dans ladite section de stockage de données historiques (16).
